# EUROPEAN PATENT SPECIFICATION

(11) **EP 1 171 322 B1**
(45) Date of publication and mention of the grant of the patent: **08.02.2006**
(21) Application number: 00915640.7
(22) Date of filing: 01.03.2000
(51) Int. Cl.: B60G 3/20, B60G 3/28

(54) **WHEEL SUSPENSION ARRANGEMENT IN A VEHICLE**
AUFHÄNGUNGSSYSTEM FÜR EIN FAHRZEUGRAD
SYSTEME DE SUSPENSION POUR ROUE DE VEHICULE

(30) Priority: 26.04.1999 SE 9901476
(43) Date of publication of application: 16.01.2002
(73) Proprietor: AB Volvo Personvagnar, 405 08 Göteborg (SE)
(72) Inventor: SANDAHL, Anders, S-423 33 Torslanda (SE); ZETTERSTRÖM, Sigvard, S-471 71 Hakenäset (SE)
(74) Representative: Andersson, Per Rune
(86) International application number: PCT/SE2000/000402
(87) International publication number: WO 2000/064690

(56) References cited:
- EP-A1- 0 857 590
- DE-A1- 4 224 484
- FR-A- 763 596
- US-A- 4 813 704
- US-A- 4 828 279

## Description

### TECHNICAL FIELD

The present invention relates to an arrangement for suspension of a wheel in a motor vehicle, in accordance with the pre-characterizing clause of attached claim 1. The invention is intended in particular for use in an independent rear wheel suspension for a driven or non-driven rear wheel of a motor vehicle.

### PRIOR ART

In vehicles, for example passenger cars, various types of suspension systems are nowadays used for the vehicle wheels. These wheel suspensions are designed in a known manner to permit attachment and spring suspension of all the wheels of the vehicle, which is in turn intended to improve the comfort of the passengers in the vehicle and to improve the vehicle's road-handling properties and increase its service life. A number of different types of wheel suspensions are already known and are included in systems with, for example, rigid or independent wheel axles which, if so required, can be supplemented with spring elements, shock absorbers and other components. In addition, use is often made of link arms which take up forces and connect the vehicle's wheels to its bodywork, and stabilizers which are used to reduce excessive pitching movements of the vehicle.

A conventional wheel suspension of the type with a rigid rear axle is a robust and effective construction which additionally maintains a constant track width (i.e. a constant distance between the points where the two rear wheels are in contact with the road surface). A disadvantage of the rigid rear axle is that the movements of one wheel are to some extent transmitted to the other wheel. For this reason, an independent rear wheel suspension is often used which is designed so that the wheels can spring independently of each other, which is an advantage in particular from the point of view-of comfort. In addition, in an independent rear wheel suspension, various link elements are used to maintain the desired track width, camber angle and toe-in angle of each wheel. An independent rear wheel suspension also permits less unsprung weight, and there is more space, for example, for the petrol tank and luggage hold.

In particular, an independent rear wheel suspension can be constructed to satisfy the requirement for a certain degree of softness in the longitudinal direction of the vehicle, i.e. with force-absorbing characteristics in the longitudinal direction, which in turn can be used to satisfy the comfort of the passengers in the vehicle. Another requirement is for a rear wheel suspension to be constructed with a high "windup" strength, i.e. to counter the tendency of the wheel-bearing housing to twist during braking of the vehicle.

Patent document US 4,828,279 already discloses an independent rear wheel suspension for a motor vehicle. The rear wheel suspension according to the said document comprises a lower link arm and an upper link ann which together connect a wheel-bearing housing to a vehicle bodywork. In addition, the wheel-bearing housing is connected elastically to the lower link arm via a further link element In this way, the wheel suspension has effective force absorption and takes up little space.

The patent document EP-A-0588694 teaches an arrangement for wheel suspension in a vehicle, comprising a wheel-bearing housing supporting a wheel, a lower link arm between the bodywork of the vehicle and the housing, an upper link arm between the bodywork and said housing, and a further connection between the bodywork and said housing. The arrangement according to EP-A-0588694 also comprises a link between said further connection and the lower link arm.

Furthermore, the patent document DE-A-4224484 (on which the preamble of claim 1 is based) teaches an arrangement for wheel suspension in a vehicle also having a wheel-bearing housing, a lower link arm, an upper link arm and a further connection between the housing and the bodywork of the vehicle.

A problem associated with the abovementioned known arrangement and other similar systems is the difficulty in achieving at the same time both a high degree of longitudinal softness and a high windup strength. A further problem is that of obtaining a wheel suspension reliably maintaining a predetermined toe-in angle of the wheel in question, even under the effect of force, for example, upon sharp braking of the vehicle.

### DISCLOSURE OF THE INVENTION

The object of the present invention is to make available an improved arrangement for a rear wheel suspension in a motor vehicle, which arrangement in particular permits a high degree of longitudinal softness and a high windup strength. This object is achieved by means of an arrangement whose features are set out in attached claim 1.

The invention is an arrangement for suspension of a wheel in a motor vehicle, comprising a wheel-bearing housing which bears the said wheel, a lower link arm which constitutes a connection between the bodywork of the motor vehicle and a lower part of the said wheel-bearing housing, and an upper link arm which constitutes a connection between the bodywork and an upper part of the said wheel-bearing housing. The invention is characterized in that it additionally comprises a further connection between the said bodywork and the said wheel-bearing housing, and a coupling link which constitutes a connection, essentially rigid in the vertical direction, between the said further connection and the lower link arm.

The invention affords a number of advantages compared to conventional systems for independent rear wheel suspensions. First, the invention satisfies the requirements for high longitudinal softness and windup strength, which in turn permits a high degree of comfort for the passengers in the vehicle and in addition effectively counteracts torsion of the wheel-bearing housing during braking. In addition, the said further connection ensures that a correct toe-in angle for the wheel can be defined and maintained. The invention also permits an advantage as regards a compact packing.

According to a preferred embodiment of the invention, use is made of a spring element in the form of a leaf spring which is fixed in the said lower link arm and is arranged extending essentially transverse to the longitudinal direction of the vehicle. The leaf spring thus replaces a conventional helical spring. This leaf spring can additionally be given a stabilizing function and thus replaces a conventional stabilizer.

Advantageous embodiments of the invention are set out in the attached dependent patent claims.

### DESCRIPTION OF THE DRAWINGS

The invention will be explained in greater detail below with reference to a preferred illustrative embodiment and to the attached drawings, in which:
- Figure 1: shows a perspective view of an arrangement according to the present invention, seen obliquely from the rear, and
- Figure 2: shows a perspective view of the arrangement according to the invention, seen obliquely from the front.

### PREFERRED EMBODIMENT

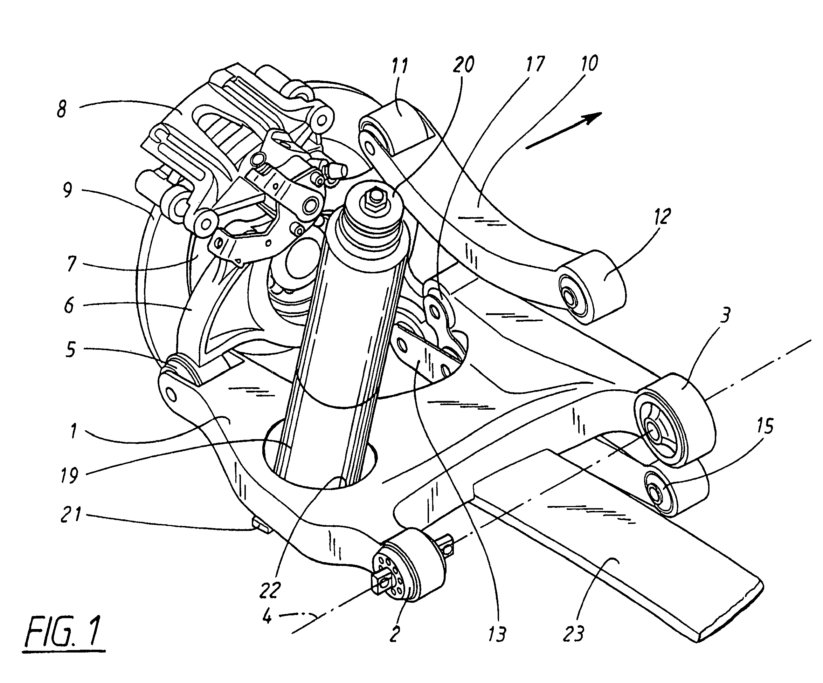

A perspective view of an arrangement according to the present invention is shown in Figure 1. According to a preferred embodiment, the arrangement is used on a rear wheel (not shown) of a motor vehicle, which is preferably, but not exclusively, a passenger car. The figure shows the invention considered in a view obliquely from the rear, i.e. as seen from the rear of the vehicle in question.

According to what is shown in Figure 1, the wheel suspension unit comprises a lower link arm 1 which is essentially H-shaped, seen from above, and which is designed with four attachment points. A first attachment point 2 and a second attachment point 3 are arranged on the vehicle's bodywork (not shown). These attachment points 2, 3 preferably comprise rubber bushings, permitting a certain degree of movement of the lower link arm 1 in relation to the bodywork. However, the invention is not limited to attachment points of the rubber bushing type, and it can alternatively comprise ball joints or similar attachment elements. Thus, an imaginary coaxial axis 4 which runs through each rubber bushing is defined with the aid of the attachment points 2, 3. This axis 4 thus defines a pivot axis for the movement of the lower link arm 1 upon spring deflection. In addition, the axis 4 is preferably arranged so as to extend essentially parallel to the longitudinal direction of the vehicle in question.

The lower link arm 1 moreover comprises a third attachment point 5 which is fixed on a wheel-bearing housing 6, which in turn supports a hub 7 in which the wheel in question can be secured in a known manner so as to rotate. The wheel-bearing housing 6 also supports a disc brake arrangement 8 which is already known per se and comprises brake linings (not shown) which are designed to be applied to a brake disc 9 which is connected to the hub 7. In this way, the wheel in question can be braked.

The longitudinal direction of the vehicle is indicated in Figure 1 by an arrow which is pointing in the direction of the front of the vehicle. An upper link arm 10 is arranged on that side of the wheel which is facing forwards. This upper link arm 10 is primarily intended to take up forces in the transverse direction of the vehicle and, together with the lower link arm 1, to define the camber angle of the wheel, i.e. the angle of inclination of the wheel in relation to an imaginary plane which runs along the vehicle at right angles to the underlying road surface. The upper link arm 10 also extends essentially at right angles to the longitudinal direction of the vehicle and is fixed in the wheel-bearing housing 6 via a first attachment point 11. More precisely, this attachment point 11 is arranged on the wheel-bearing housing 6 at a position which is situated above the centre point of the wheel. In addition, the upper link arm 10 is fixed in the bodywork via a second attachment point 12. Both of the attachment points 11, 12 in the upper link arm 10 preferably comprise rubber bushings, but they can alternatively comprise ball joints, for example.

The said second attachment point 12 of the upper link arm 10 is preferably placed outside the bodywork attachments 2, 3 of the lower link arm 1. The said second attachment point 12 of the upper link arm 10 is also preferably oriented essentially along the same extent as the axis 4.

In the embodiment which is shown in the figures, the upper link arm 10 is designed with a slight curvature. In this way, it can fit under a side beam (not shown) running in the longitudinal direction of the vehicle.

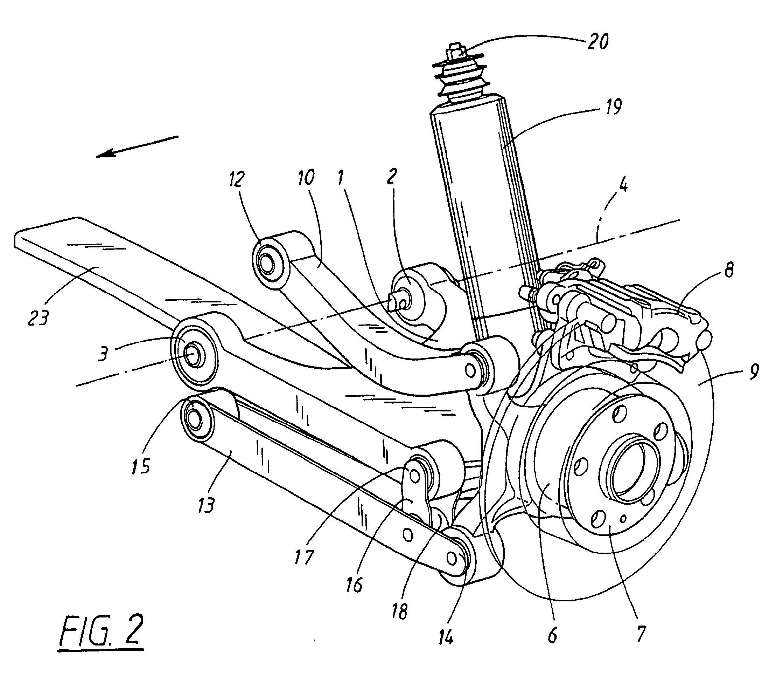

As can be seen particularly clearly from Figure 2, which is a perspective view of the invention as seen obliquely from in front, the wheel suspension according to the invention comprises a further link element in the form of a bar 13 which is fixed as a connection between the bodywork and the wheel-bearing housing 6, to be more exact extending essentially in the transverse direction of the vehicle and between the lower part of the wheel-bearing housing 6 and the vehicle bodywork. The coupling to the wheel-bearing housing 6 is made via a first attachment point 14 which is preferably situated below a horizontal plane extending through the centre point of the wheel, while the coupling to the bodywork is via a second attachment point 15. According to the embodiment, the bar 13 is arranged extending below the lower link arm 1. Like the other attachments in the invention, the attachments 14, 15 of the bar 13 preferably comprise rubber bushings. The bar 13 is preferably made up of two elongate plates of steel or corresponding material, between the end parts of which the said attachments 14, 15 are arranged.

It is an underlying principle of the invention that the bar 13 is connected to the lower link arm 1 via a further link element in the form of a coupling link 16. The coupling link 16 preferably comprises two elongate plates made of steel or similar material. As can be seen from Figure 2, the coupling link 16 is preferably arranged extending so as to form a right angle to the plane of the lower link arm 1, and is coupled to the lower link arm 1 and bar 13 via further attachments 17, 18, respectively, which preferably comprise rubber bushings. The attachments 17, 18 can alternatively comprise a ball joint, a rubber pad or the like. The function of the coupling link 16 is based on its constituting a coupling, essentially fixed in the vertical direction, between the lower link arm 1 and the bar 13. In this way, force can be taken up in an essentially vertical direction from the wheel-bearing housing 6, via the bar 13 and the coupling link 16, and onwards to the lower link arm 1.

The bar 13 is designed and fixed in such a way that it defines a specific distance between the wheel-bearing housing 6 and the bodywork. This ensures that the wheel is given a correct toe-in angle, i.e. a predetermined angle between the longitudinal axis of the vehicle and an imaginary plane along the wheel. With the aid of the bar 13, especially in the case of longitudinal suspension upon braking and upon collision, it is possible to ensure that the wheel at all times maintains this toe-in angle. In other words, the tendency for the wheel to toe out in certain situations, for example upon sharp braking, is effectively counteracted by means of the bar 13. For this purpose, the bar 13 preferably extends in such a way as to form an angle of the order of 90° in relation to the longitudinal direction of the vehicle.

The bar 13 acts in such a way that it takes up torque via the coupling to the lower link arm 1, i.e. via the coupling link 16. For example, the forces which arise upon braking are transmitted to the bodywork via the lower link arm 1 and the bar 13. By means of the design, according to the invention, of these components, a high windup strength is achieved, i.e. the tendency of the wheel-bearing housing to twist during braking can be counteracted. Moreover, the longitudinal forces of the wheel can be taken up by the outer attachment 15 of the lower link arm 1 to the wheel-bearing housing 6, and the front attachment point 3 of the lower link arm 1 - preferably comprising a relatively large and radially soft bushing - gives the wheel the desired longitudinal softness.

Generally speaking, the lower link arm 1 takes up forces in the longitudinal direction, while the bar 13 together with the lower link arm 1 takes up forces in the transverse direction. According to the invention, the lower link arm 1 is designed and fixed with a high degree of torsional strength which is communicated to the wheel-bearing housing, but essentially without forces arising in the horizontal plane. As forces are transmitted from the bar 13 to the lower link arm 1 via the coupling link 16, a shearing movement is permitted between the bar 13 and the lower link arm 1.

The coupling link 16 is preferably positioned as far out on the bar 13 as possible, i.e. as close as possible to the wheel-bearing housing 6. In this way, the bending forces acting on the bar 13 are minimized.

In summary, the arrangement according to the invention provides a wheel suspension which is soft in the longitudinal direction but still with windup strength, these being extremely advantageous properties in a rear wheel suspension, for example for a passenger car.

The wheel suspension according to the invention moreover comprises a shock absorber 19 of essentially conventional type, which is fixed in the bodywork via a first attachment point 20 and in the lower link arm 1 via a second attachment point 21 (the second attachment point 21 can be seen in part in Figure 1). The second attachment point 21 is preferably arranged on the underside of the lower link arm 1. For this purpose, the shock absorber 19 is arranged so that it runs through a through-hole 22 in the lower link arm 1. This can be seen in Figure 1. The fact that the shock absorber 19 is fixed on the underside of the lower link arm has advantages as regards the packing of the shock absorber 19.

The arrangement according to the invention furthermore comprises a spring element in the form of a leaf spring 23 which is arranged extending essentially transverse to the longitudinal direction of the vehicle and is fixed with its end part in the lower link arm 1. Using a leaf spring has advantages as regards reduced weight and reduced space requirements in the vehicle. Moreover, the leaf spring 23 replaces a conventional stabilizer, i.e. according to the invention the leaf spring 23 is given a stabilizing function.

The whole arrangement according to the invention slopes slightly towards the rear, i.e. in relation to a vertical plane through the centre of the wheel. The vehicle is thereby given an effective anti-lift and anti-squat function, i.e. the tendency of the vehicle body to lift at the back during braking and to drop upon acceleration can be effectively counteracted.

The invention is not limited to the embodiment described above and can be varied within the scope of the attached patent claims. For example, the invention can be used in different types of vehicles, e.g. passenger cars, lorries and buses. In addition, the invention can be applied both to driven and non-driven wheels. The invention can be used both in two-wheel drive and four-wheel drive. As regards the choice of material, the two link arms 1, 10 can be made of steel, aluminium or similar suitable material.

As an alternative to the leaf spring 23 described above, other springs can also be used. For example, a conventional helical spring made of steel can be used for this purpose.

Moreover, the bar 13 can alternatively be placed on that side of the wheel-bearing housing 6 which faces towards the rear of the vehicle. The bar 13 is preferably arranged extending below an imaginary horizontal plane which runs through the centre of the wheel. However, the invention is not limited to this design and can be arranged above such a plane.

As an alternative to what has been described above, the coupling link can be arranged so that it constitutes a connection between the lower link arm and the upper link arm. In this way, the lower link arm can communicate its torsional strength to the wheel-bearing housing via the upper link arm.

Finally, it should be noted that the arrangement according to the invention can be fixed on a bodywork (as has been described above) or alternatively to a so-called sub-frame, i.e. a separate attachment component by means of which a complete rear wheel suspension can be effectively mounted.

## Claims

1. Arrangement for suspension of a wheel in a motor vehicle, comprising a wheel-bearing housing (6) which bears the said wheel, a lower link arm (1) which constitutes a connection between the bodywork of the motor vehide and a lower part of said wheel-bearing housing (6), an upper link arm (10) which constitutes a connection between the bodywork and an upper part of said wheel-bearing housing (6), and a further connection (13) between said bodywork and said wheel-bearing housing (6), wherein it additionally comprises a coupling link (16) which constitutes a connection, essentially rigid in the vertical direction, between said further connection (13) and the lower link arm (1), and that the lower link arm (1) is essentially H-shaped and comprises four attachment points (2. 3. 5, 17), of which a first attachment point and a second attachment point (2. 3) are connected to the said bodywork a third attachment point (5) is connected to said wheel-bearing housing (6), and a fourth attachmer point (17) is connected to said coupling link (16) **characterized in**
**that** the further connection (13) is arranged extending below the lower link arm (1), and said coupling link (16) furthermore being pivotally arranged in said further connection (13) and in the lower link arm (1).

2. Arrangement according to dairn 1, **characterized in that** said further connection (13) is a bar (13) which is dimensioned and arranged such that a predetermined toe-in angle of the wheel is defined and maintained.

3. Arrangement according to claim 1, **characterized in that** said further connection (13) is arranged extending under the lower link arm (1), extending essentially along an imaginary line between said second attachment point (3) and said fourth attachment point (17).

4. Arrangement according to any of the preceding claims, **characterized in that** the coupling link (16) has an essentially vertical extent.

5. Arrangement according to any of the preceding claims, **characterized in that** it comprises a leaf spring (23) extending essentially transverse to the longitudinal direction of the vehicle and fixed in said lower link arm (1).

6. Arrangement according to claim 5, **characterized in that** said leaf spring (23) is designed with stabilizing properties.

7. Arrangement according to any of the preceding claims, **characterized in that** it comprises a shock absorber (19) which is secured between said bodywork and a point on the underside of the lower link arm (1), the shock absorber (19) running freely through a hole (22) in said lower link arm (1).

8. Arrangement according to any of the preceding claims, **characterized in that** it is designed with a predetermined rearward inclination in relation to a vertical plane through the centre of the wheel, in order to cance out the tendency for the rear part of the bodywork to lift and drop, respectively, upon braking and acceleration of the vehicle.

9. Vehicle comprising an arrangement according to any of the preceding claims.

## Patentansprüche

1. Anordnung zur Aufhängung eines Rades in einem Kraftfahrzeug, mit einem Radlagergehäuse (6), dass das Rad lagert, einem unteren Gelenkarm (1), der eine Verbindung zwischen dem Aufbau des Kraftfahrzeugs und einem unteren Abschnitt des Radlagergehäuses (6) bildet, einem oberen Gelenkarm (10), der eine Verbindung zwischen dem Aufbau und einem oberen Abschnitt des Radlagergehäuses (6) bildet, und mit einer weiteren Verbindung (13) zwischen dem Aufbau und dem Radlagergehäuse (6), wobei die Anordnung zusätzlich einen Verbindungshebel (16) aufweist, der eine Verbindung, die im wesentlichen in vertikaler Richtung steif ist, zwischen der weiteren Verbindung (13) und dem unteren Gelenkarm (1) bildet, und wobei der untere Gelenkarm (1) im Wesentlichen H-förmig gestaltet ist und vier Befestigungspunkte (2, 3, 5, 17) aufweist, von denen ein erster Befestigungspunkt und ein zweiter Befestigungspunkt (2, 3) mit dem Aufbau verbunden sind, ein dritter Befestigungspunkt (5) mit dem Radlagergehäuse (6) verbunden ist, und ein vierter Befestigungspunkt (17) mit dem Verbindungshebel (16) verbunden ist,
**dadurch gekennzeichnet, dass** die weitere Verbindung (13) so angeordnet ist, dass sie sich unterhalb des unteren Gelenkarms (1) erstreckt, und
dass der Verbindungshebel (16) weiterhin schwenkbar in der weiteren Verbindung (13) und in dem unteren Gelenkarm (1) angeordnet ist.

2. Anordnung nach Anspruch 1, **dadurch gekennzeichnet, dass** die weitere Verbindung (13) eine Stange (13) ist, welche derart dimensioniert und angeordnet ist, dass ein vorbestimmter Vorspurwinkel des Rades gebildet und beibehalten wird.

3. Anordnung nach Anspruch 1, **dadurch gekennzeichnet, dass** die weitere Verbindung (13) so angeordnet ist, dass sie sich unter dem unteren Gelenkarm (1) erstreckt, wobei sie sich im Wesentlichen längs einer imaginären Linie zwischen dem zweiten Befestigungspunkt (3) und dem vierten Befestigungspunkt (17) erstreckt.

4. Anordnung nach einem der vorangehenden Ansprüche, **dadurch gekennzeichnet, dass** der Verbindungshebel (16) eine im Wesentlichen vertikale Erstreckung besitzt.

5. Anordnung nach einem der vorangehenden Ansprüche, **dadurch gekennzeichnet, dass** sie eine Blattfeder aufweist, die sich im Wesentlichen quer zur Längsrichtung des Fahrzeugs erstreckt und in dem unteren Gelenkarm (1) befestigt ist.

6. Anordnung nach Anspruch 5, **dadurch gekennzeichnet, dass** die Blattfeder (23) mit stabilisierenden Eigenschaften ausgelegt ist.

7. Anordnung nach einem der vorangehenden Ansprüche, **dadurch gekennzeichnet, dass** sie einen Stoßdämpfer (19) aufweist, der zwischen dem Aufbau und einem Punkt der Unterseite des unteren Gelenkarms (1) befestigt ist, wobei der Stoßdämpfer (19) frei durch ein Loch (22) in dem unteren Gelenkarm (1) verläuft.

8. Anordnung nach einem der vorangehenden Ansprüche, **dadurch gekennzeichnet, dass** sie mit einer vorbestimmten Rückwärtsneigung bezüglich einer vertikalen Ebene durch die Mitte des Rades ausgelegt ist, um die Tendenz des hinteren Abschnitts des Aufbaus, beim Bremsen und Beschleunigen des Fahrzeugs jeweils hoch und herunter zu gehen, zu beseitigen.

9. Fahrzeug mit einer Anordnung gemäß einem der vorangehenden Ansprüche.

## Revendications

1. Agencement pour la suspension d'une roue dans un véhicule à moteur, comportant un logement formant palier de roue (6) qui supporte ladite roue, un bras de liaison inférieur (1) qui constitue une connexion entre la carrosserie du véhicule à moteur et une partie inférieure dudit logement formant palier de roue (6), un bras de liaison supérieur (10) qui constitue une connexion entre la carrosserie et une partie supérieure dudit logement formant palier de roue (6), et une connexion supplémentaire (13) entre ladite carrosserie et ledit logement formant palier de roue (6), comportant de plus une biellette de couplage (16) qui constitue une connexion essentiellement rigide dans la direction verticale entre ladite connexion supplémentaire (13) et le bras de liaison inférieur (1), le bras de liaison inférieur (1) étant sensiblement en forme de H et comportant quatre points de fixation (2, 3, 5, 17), dont un premier point de fixation et un deuxième point de fixation (2, 3) sont connectés à ladite carrosserie, un troisième point de fixation (5) est connecté audit logement formant palier de roue (6), et un quatrième point de fixation (17) est connecté à ladite biellette de couplage (16), **caractérisé en ce que** la connexion supplémentaire (13) est agencée s'étendant sous le bras de liaison inférieur (1), et ladite biellette de couplage (16) étant agencée en outre de manière pivotante dans ladite connexion supplémentaire (13) et dans ledit bras de liaison inférieur (1).

2. Agencement selon la revendication 1, **caractérisé en ce que** ladite connexion supplémentaire (13) est une barre (13) qui est dimensionnée et agencée de sorte qu'un angle de convergence prédéterminé de la roue est défini et maintenu.

3. Agencement selon la revendication 1, **caractérisé en ce que** ladite connexion supplémentaire (13) est agencée s'étendant sous le bras de liaison inférieur (1), s'étendant essentiellement le long d'une ligne imaginaire entre ledit deuxième point de fixation (3) et ledit quatrième point de fixation (17).

4. Agencement selon l'une quelconque des revendications précédentes, **caractérisé en ce que** la biellette de couplage (16) a une étendue essentiellement verticale.

5. Agencement selon l'une quelconque des revendications précédentes, **caractérisé en ce qu'**il comporte un ressort en lame (23) s'étendant essentiellement transversalement à la direction longitudinale du véhicule, et fixé dans ledit bras de liaison inférieur.

6. Agencement selon la revendication 5, **caractérisé en ce que** ledit ressort en lame (23) est conçu avec des propriétés de stabilisation.

7. Agencement selon l'une quelconque des revendications précédentes, **caractérisé en ce qu'**il comporte un absorbeur de choc (19) qui est fixé entre ladite carrosserie et un point sur le côté inférieur du bras de liaison inférieur (1), l'absorbeur de choc (19) s'étendant librement à travers un trou (22) dans ledit bras de liaison inférieur (1).

8. Agencement selon l'une quelconque des revendications précédentes, **caractérisé en ce qu'**il est conçu avec une inclinaison vers l'arrière prédéterminée par rapport à un plan vertical à travers le centre de la roue, pour annuler la tendance de la partie arrière de la carrosserie à se lever et à s'abaisser, respectivement, lors d'un freinage et d'une accélération du véhicule.

9. Véhicule comportant un agencement selon l'une quelconque des revendications précédentes.
